# EUROPÄISCHE PATENTANMELDUNG

(11) **EP 3 132 882 A1**
(43) Veröffentlichungstag der Anmeldung: **22.02.2017**
(21) Anmeldenummer: 15002748.0
(22) Anmeldetag: 23.09.2015
(51) Int. Cl.: B23K 26/00, B23K 26/14, B23K 26/70

(54) **VERFAHREN UND VORRICHTUNG ZUM LASERHÄRTEN EINES WERKSTÜCKS**

(30) Priorität: 20.08.2015 DE 102015010915
(71) Anmelder: Linde Aktiengesellschaft, 80331 München (DE)
(72) Erfinder: Waning, Gerd, 32107 Bad Salzuflen (DE)
(74) Vertreter: Gellner, Bernd

(57) **Zusammenfassung**

Die Erfindung betrifft ein Verfahren zum Laserhärten von metallischen Werkstücken (2) mit einer Lasereinheit (100), zur Abgabe eines Laserstrahls (5), wobei das Werkstück (2) durch Aufbringung eines Kühlmediums (4) gekühlt wird, wobei das Kühlmedium (4) Kohlendioxid enthält.

## Beschreibung

Die Erfindung betrifft ein Verfahren sowie eine entsprechende Vorrichtung zum Laserhärten von metallischen Werkstücken mit einer Kühlung des Werkstücks.

Eine gezielte lokale Wärmebehandlung von metallischen Werkstücken ermöglicht eine punktuelle Ertüchtigung von beanspruchten Randschichten bei weitgehend unbeanspruchten Grundwerkstoffen. Hierbei entstehen verschleißfeste, reibungsarme, korrosions- sowie hochfeste Oberflächen. Darüber hinaus ist es möglich, bei Bauteilen bzw. Baugruppen gezielt nur besonders beanspruchte Teile partiell zu bearbeiten und dadurch eine preiswertere und leichtere Konstruktion zu ermöglichen. Hierbei spielen insbesondere die im Härtungsgefüge entstehenden Druckeigenspannungen eine wesentliche Rolle.

Das Laserhärten von metallischen Werkstücken ist ein Verfahren der Oberflächenhärtung bzw. Randschichthärtung, um bei metallischen Werkstücken äußerste Schichten zu härten. Üblicherweise wird eine Abschreckung bzw. Abkühlung eines austenitisierten Bereichs durch Abkühlung über Wärmeleitung in untere Materialschichten als sogenannte "Selbstabschreckung" bzw. "Selbstabkühlung" durchgeführt.

Problematisch ist dabei jedoch, dass insbesondere bei dünnwandigen Bauteilen die Abkühlgeschwindigkeit aufgrund eines ungünstigen Verhältnisses zwischen abzukühlender Materialmenge und Wärme aufzunehmender Materialmenge zu gering ist, wodurch benötigte Härtewerte nicht erreicht werden können.

Es ist daher wünschenswert, ein Verfahren und eine Vorrichtung bereitzustellen, die die obige Problematik lösen.

Erfindungsgemäß werden ein Verfahren sowie eine entsprechende Vorrichtung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung schlägt ein Verfahren zum Laserhärten von metallischen Werkstücken mit einer Lasereinheit zur Abgabe eines Laserstrahls vor, wobei das Werkstück durch Aufbringung eines Kühlmediums gekühlt wird, wobei das Kühlmedium Kohlendioxid enthält.

Unter einem Werkstück sei in diesem Zusammenhang ein Bauteil bzw. eine Baugruppe verstanden, das bzw. die sich von dem insbesondere metallischen Ausgangsmaterial durch wenigstens einen Bearbeitungsschritt in Form bzw. Art unterscheidet.

Durch eine Kühlung des Werkstücks wird eine höhere Abkühlgeschwindigkeit des zu härtenden Bereichs des Werkstücks im Vergleich zu einer Laserhärtung ohne Kühlung des Werkstücks erreicht. Durch höhere Abkühlgeschwindigkeiten lassen sich höhere Härten erzielen und somit eine gesteigerte Materialwertigkeit bzw. Materialbeständigkeit, die bei besonders beanspruchenden Anwendungen benötigt werden. Darüber hinaus können kostengünstig insbesondere niedriglegiertere Werkstücke verwendet werden, wobei im Vergleich zu nichtgekühlten Härteverfahren eine entsprechende Materialbeständigkeit zu einem geringeren Preis erhalten wird, da beispielsweise die Martensitstarttemperatur eines Stahls bereits erreicht wird, bevor sich andere Gefügebestandteile ausbilden.

Die Verwendung von Kohlendioxid als Kühlmedium bietet den Vorteil, dass es sich im Vergleich zu anderen Gasen, wie beispielsweise Stickstoff, bei höheren Temperaturen verfestigen lässt, und daher auch als Feststoff auf das Werkstück aufgebracht werden kann. Bei der Entspannung von flüssigem Kohlendioxid entsteht unter Normalbedingungen bei einer Unterschreitung eines Drucks von 5,18 bar Absolutdruck Trockeneis. Hierbei ist eine punktuelle Ablagerung des festen Kohlendioxids im Gegensatz zu Flüssigkeiten oder Gasen möglich, wobei ein höherer Wärmeübertragung bzw. Kühlung des Werkstücks erreicht wird.

Bevorzugt liegt das Kohlendioxid als Flüssigkeit und/oder als erstarrter Feststoff vor. Festes Kohlendioxid bzw. Trockeneis weist eine geringe Härte auf und ermöglicht daher eine Abkühlung, bei der das Werkstück nicht beschädigt wird. Darüber hinaus kann das Kohlendioxid noch zusätzlich durch tiefkalte Gase bzw. Flüssigkeiten, wie beispielsweise flüssigen Stickstoff, abgekühlt, insbesondere unterkühlt werden. Hierbei entsteht eine erhöhte Kühlung des Werkstücks durch einen in den Düsen gebildeten, unterkühlten Kohlendioxid-Schneestrahl.

Vorteilhafterweise wird dem Kühlmedium bzw. einem Kühlmediumstrahl Wasser und/oder Wasserdampf zugegeben, wodurch der Kühleffekt gesteigert wird und somit eine höhere Abkühlungsgeschwindigkeit des Werkstücks erfolgt.

Vorzugsweise wird zur Auftragung des Kühlmediums wenigstens eine Düse verwendet. Durch Auftragung des Kühlmediums mit der Düse bzw. einer Versprühung des Kühlmediums wird eine definierte Oberfläche zur Wärmeübertragung zwischen dem Werkstück und dem Kühlmedium bereitgestellt, was zu einer effizienten Abkühlung des Werkstücks führt. Eine Düse ist dabei besonders als Einstoff- oder Zweistoffdüse ausgebildet. Darüber hinaus können insbesondere Düsen aus dem Linde Linspray-Verfahren verwendet werden, die eine Versprühung bzw. Zerstäubung bei Niederdruck oder Hochdruck ermöglichen. Düsen bieten den Vorteil eines punktuell genau einsetzbaren Sprühstrahls, der zur gezielten Wärmeabfuhr vom Werkstück genutzt werden kann.

Darüber hinaus kann das Kühlmedium auf die Seite eines zu härtenden Bereichs und/oder auf die dem zu härtenden Bereich abgewandte Seite des Werkstücks aufgetragen werden. Eine Kühlung des Werkstücks von mehreren Seiten erhöht die Wärmeabfuhr und somit die Abkühlgeschwindigkeit. Eine ausschließliche Abkühlung der dem zu härtenden Bereich abgewandten Seite ist vorteilhaft, wenn aus geometrischen Gründen der zu härtende Bereich für das Kühlmedium nicht optimal zugänglich ist.

Vorteilhafterweise wird das Werkstück vor dem Laserhärten gekühlt. Eine Abkühlung des Werkstücks vor dem eigentlichen Härteverfahren erhöht die Wärmeabfuhr in ein nicht zu härtendes Grundmaterial und somit die Abkühlgeschwindigkeit.

Darüber hinaus wird das Kühlmedium auf das Werkstück dem Laserstrahl vorlaufend bzw. voreilend, gleichlaufend und/oder nachlaufend bzw. nacheilend aufgetragen. Insbesondere eine Kombination von vorlaufender, gleichlaufender und/oder nachlaufender Kühlung erhöht die Abkühlgeschwindigkeit des Werkstücks und steigert somit die Wirksamkeit des Härteverfahrens des Werkstücks.

Die Erfindung betrifft neben dem oben beschriebenen Verfahren weiterhin eine entsprechende Vorrichtung. Ausgestaltungen und Vorteile dieser erfindungsgemäßen Vorrichtung ergeben sich aus der obigen Beschreibung des erfindungsgemäßen Verfahrens in analoger Art und Weise.

Erfindungsgemäß wird eine Vorrichtung zum Laserhärten von metallischen Werkstücken mit einer Lasereinheit und wenigstens einer Kühlvorrichtung vorgeschlagen. Die wenigstens eine Kühlvorrichtung ist dazu eingerichtet, Kohlendioxid als Kühlmedium bereitzustellen.

Zweckmäßiger Weise ist die wenigstens eine Kühlvorrichtung mit wenigstens einer Düse verbunden. Vorteilhafterweise ermöglicht die Ausbildung von mehreren Düsen insbesondere eine mehrstufige Kühlung des Werkstücks, und somit eine höhere Abkühlgeschwindigkeit und gesteigerte Härte des Werkstücks. Beispielsweise kann die gleichzeitige Kühlung der Seite des zu härtenden Bereichs des Werkstücks und der dem zu härtenden Bereich abgewandten Seite erfolgen. Eine vorlaufende, gleichlaufende und/oder nachlaufende Simultankühlung des Werkstücks ist ebenso möglich.

Vorteilhafterweise ist die wenigstens eine Düse bewegbar an der wenigstens einen Kühlvorrichtung angeordnet. Eine bewegbare Anordnung ist insbesondere über gelenkig miteinander verbundene Bindungselemente bereitgestellt. Die bewegbare Anordnung der wenigstens einen Düse erlaubt eine flexible Kühlung verschiedener Bereiche des Bauteils und/oder einer zeitlichen Abstimmung des zu kühlenden Bereichs in Abhängigkeit des aufgetragenen Laserstrahls.

Bevorzugt bildet die wenigstens eine Kühlvorrichtung eine Einheit mit der Lasereinheit. Hierdurch lässt sich die Vorrichtung besonders kompakt anfertigen und ermöglicht einen einfachen Aufbau und Transport und somit auch einen nicht stationären Betrieb. Die Einheit aus Kühlvorrichtung und Lasereinheit erlaubt eine voneinander separierte und unabhängige Automation sowohl der Kühleinrichtung als auch der Lasereinheit. Zudem erlaubt ein einheitlicher Aufbau eine einfache und übersichtliche Bedienbarkeit. Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Figurenbeschreibung

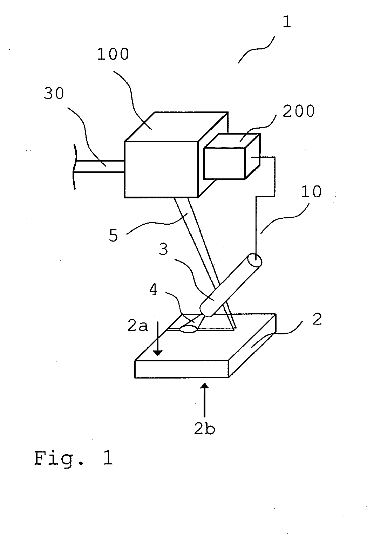

- Figur 1: zeigt schematisch eine bevorzugte Ausgestaltung einer erfindungsgemäßen Vorrichtung in einer perspektivischen Ansicht.

Figur 1 zeigt eine bevorzugte Ausgestaltung einer erfindungsgemäßen Vorrichtung zum erfindungsgemäßen Laserhärten von metallischen Werkstücken 2 mit einer Kühlung des Werkstücks 2 in einer perspektivischen Ansicht. Der Laserstrahl 5 wird mittels einer Lasereinheit 100 erzeugt und auf das Werkstück 2 gerichtet. Ein Kühlmedium 4 wird in einer Kühlvorrichtung 200 bereitgestellt und ist dem Laserstrahl 5 nachlaufend über eine mit der Kühlvorrichtung verbundene Düse 3 auf die Seite 2a des zu härtenden Bereichs des Werkstücks 2 gerichtet. Die Düse 3 ist insbesondere über Gelenke bewegbar an der Kühlvorrichtung 200 angeordnet. In einer weiteren bevorzugten Ausführung kann das Kühlmedium 4 auch dem Laserstrahl 5 vorlaufend und/oder gleichlaufend auf das Werkstück 2 aufgetragen werden. Darüber hinaus kann das Kühlmedium 4 auch auf die dem zu härtenden Bereich abgewandte Seite 2b zur Kühlung des Werkstücks 2 aufgetragen werden. Die Kühlvorrichtung 200 ist in dieser bevorzugten Ausgestaltung an der Lasereinheit 100, die mittels einer Halterung 30 über dem Werkstück 2 angebracht ist, ausgebildet.

Darüber hinaus können in einer weiteren bevorzugten Ausgestaltung mehrere Kühlvorrichtungen 200 ausgebildet sein, die jeweils mit wenigstens einer Düse 3 verbunden sind. Die Kühlvorrichtungen 200 können mit der Lasereinheit 100 eine Einheit bilden. Mehrere Düsen 3 ermöglichen insbesondere eine mehrstufige Kühlung des Werkstücks 2. So ist eine gleichzeitige Kühlung der Seite des zu härtenden Bereichs 2a und/oder der dem zu härtenden Bereich abgewandten Seite 2b denkbar. Eine vorlaufende, gleichlaufende und/oder nachlaufende Simultankühlung des Werkstücks 2 durch gleichzeitiges Auftragen von Kühlmittel 4 ist in der Ausgestaltung mit mehreren Düsen 3 ebenso denkbar.

## Patentansprüche

1. Verfahren zum Laserhärten von metallischen Werkstücken (2) mit einer Lasereinheit (100), zur Abgabe eines Laserstrahls (5), wobei das Werkstück (2) durch Aufbringung eines Kühlmediums (4) gekühlt wird, **dadurch gekennzeichnet, dass** das Kühlmedium (4) Kohlendioxid enthält.

2. Verfahren nach Anspruch 1, wobei das Kohlendioxid in Form einer Flüssigkeit und/oder eines erstarrten Feststoffs vorliegt.

3. Verfahren nach Anspruch 1 oder 2, wobei dem Kühlmedium (4) Wasser und/oder Wasserdampf zugegeben wird.

4. Verfahren nach einem der Ansprüche 1 bis 3, wobei das Kühlmedium durch tiefkalte Gase und/oder Flüssigkeiten abgekühlt, insbesondere unterkühlt wird.

5. Verfahren nach einem der vorstehenden Ansprüche, wobei zur Aufbringung des Kühlmediums (4) wenigstens eine Düse (3) verwendet wird.

6. Verfahren nach einem der vorstehenden Ansprüche, wobei das Kühlmedium (4) auf die Seite eines zu härtenden Bereichs (2a) des Werkstücks und/oder auf die dem zu härtenden Bereich abgewandte Seite (2b) aufgetragen wird.

7. Verfahren nach einem der vorstehenden Ansprüche, wobei das Werkstück (2) vor dem Laserhärten vorgekühlt wird.

8. Verfahren nach einem der vorstehenden Ansprüche, wobei das Kühlmedium (4) auf das Werkstück (2) dem Laserstrahl (5) vorlaufend, gleichlaufend und/oder nachlaufend aufgebracht wird.

9. Vorrichtung (1) zum Laserhärten von metallischen Werkstücken (2) mit einer Lasereinheit (100) und wenigstens einer Kühlvorrichtung (200), wobei die wenigstens eine Kühlvorrichtung (200) dazu eingerichtet ist, Kohlendioxid als Kühlmedium (4) bereitzustellen.

10. Vorrichtung (1) nach Anspruch 9, wobei die wenigstens eine Kühlvorrichtung (200) mit wenigstens einer Düse (2) verbunden ist.

11. Vorrichtung (1) nach Anspruch 10, wobei die wenigstens eine Düse (2) bewegbar an der wenigstens einen Kühlvorrichtung (200) angeordnet ist.

12. Vorrichtung (1) nach einem der Ansprüche 9 bis 11, wobei die wenigstens eine Kühlvorrichtung (200) mit der Lasereinheit (100) eine Einheit bildet.
